# EUROPEAN PATENT APPLICATION

(11) **EP 1 862 373 A1**
(43) Date of publication of application: **05.12.2007**
(21) Application number: 07108961.9
(22) Date of filing: 25.05.2007
(51) Int. Cl.: B62D 5/04, H02K 5/173

(54) **Motor and electric power steering system**

(30) Priority: 29.05.2006 JP 2006148976
(71) Applicant: JTEKT CORPORATION, Chuo-ku Osaka-shi Osaka 542-8502 (JP)
(72) Inventor: Kanda, Naotake, Osaka-shi, Osaka 542-8502 (JP); Niguchi, Noboru, Osaka-shi, Osaka 542-8502 (JP)
(74) Representative: TBK-Patent

(57) **Abstract**

A motor (52) includes a cylindrical motor case (1) having a bottom, in a bracket (2) which supports a press-fitted output shaft (7) side bearing (8) and closes an opening of the motor case (1). The motor (52) further includes a ring member (27) that is press-fitted to the bracket (2) and is brought into abutment with the output shaft (7) side bearing (8).

## Description

### BACKGROUND OF THE INVENTION

### 1. Field of the Invention

This invention relates to a motor, and an electric power steering system in which a motor is provided for assisting a steering operation such that the motor is driven and controlled based on a steering torque detected by a torque sensor.

### 2. Related Art

An electric power steering system for reducing load of a driver is provided with an input shaft connected to a steering member (steering wheel, steering handle etc.), an output shaft connected to control wheels through a pinion and a rack or the like, and a connecting shaft that connects the input shaft and the output shaft. Based on a torsion angle caused in the connecting shaft, a steering torque applied to the input shaft is detected by a torque sensor. Then, based on a detected steering torque value, the motor for assisting the steering operation coupled to the output shaft is driven and controlled.

In such an electric power steering system, brushless motors have come to be applied to the motor for assisting the steering operation in recent years. The brushless motor is a motor that is provided with permanent magnets in a rotor and rotates the rotor by controlling a wave form generating circuit which generates magnetic field of rotation in a stator based on a (rotational) position of the rotor. Since no brush is provided, loss or mechanical noise by the brush and electrical noise by the brush are not caused.

JP-A-2000-152560 Publication discloses a negative actuation brake in an electric motor in which a motor shaft is attached to a motor flange and rotatably supported so as to extend in an axial direction through a bearing and an attachment ring.

However, for the motor for assisting the steering operation in the electric power steering systems as described above, it is necessary to provide the bearing for supporting the shaft. This bearing is press-fitted to a through hole formed in the bracket. Aluminum bracket is often selected to such motors because it can be easily formed and it is non-magnetic material. However, if the bearing and the bracket are made of different materials, namely, made of iron and aluminum, respectively, for example, there is a problem that a rattle might be caused due to different coefficients of thermal expansion.

### SUMMARY OF THE INVENTION

The present invention has been made in view of the above circumstances, and an object of the invention is to provide a motor in which a rattle is hardly caused even if the bearing and the shaft are made of different materials in first and second aspects of the invention.

Another object of the invention is to provide an electric power steering system in which the motor according to the first or second aspect of the invention is provided as the motor for assisting the steering operation.

The motor according to the first aspect of the invention is directed to a motor including a cylindrical motor case having a bottom; and a bracket which supports a press-fitted output shaft side bearing and closes an opening of the motor case; characterized in that the motor further includes a ring member that is press-fitted to the bracket and is brought into abutment with the output shaft side bearing.

The motor according to the second aspect of the invention is characterized in that a material of the ring member is the same as that of the bracket.

The electric power steering system according to the third aspect of the invention is directed to an electric power steering system including: a torque sensor that detects a steering torque applied by a steering member of a vehicle; and a motor according to the first or second aspect of the invention, and characterized in that the motor is driven based on the steering torque that is detected by the torque sensor so as to assist a steering operation.

According to the motor of the first aspect of the invention, since the ring member is press-fitted to the bracket and is also brought into abutment with the output shaft side bearing, it is possible to obtain a motor in which the rattle is hardly caused even if the bearing and the bracket are made of different materials.

According to the motor of the second aspect of the invention, since the material of the ring member that is press-fitted to the bracket and is brought into abutment with the output shaft side bearing is the same as that of the bracket, it is possible to obtain a motor in which the rattle is hardly caused even if the bearing and the bracket are made of different materials.

According to the electric power steering system of the third aspect of the invention, since the motor of the first or second aspect of the invention is driven based on the steering torque detected by the torque sensor to assist the steering operation, it is possible to obtain an electric power steering system in which the rattle is hardly caused in the motor for assisting the steering operation.

### BRIEF DESCRIPTION OF THE DRAWINGS

Fig. 1 is a schematic view showing a construction of an electric power steering system according to an embodiment of the invention.
Fig. 2 is a longitudinal cross-sectional view showing an essential part of a motor according to the embodiment of the invention.
Fig. 3 is an enlarged view showing a bracket in the motor shown in Fig. 2.

### DETAILED DESCRIPTION OF THE PREFERRED EMBODIMENTS

A preferred embodiment of the present invention will now be described in detail with reference to the drawings.

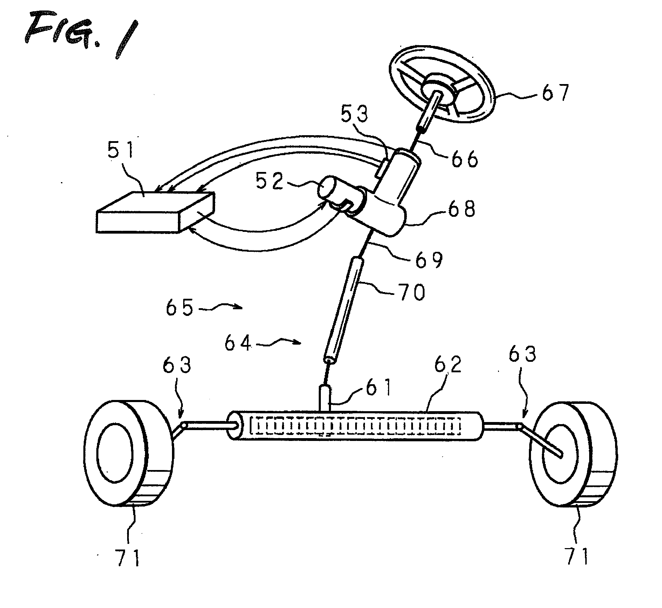

Fig. 1 is a schematic view showing construction of an electric power steering system according to an embodiment of the invention. The electric power steering system includes a steering member (steering wheel, or steering handle) 67 for a steering operation, a motor 52 for assisting the steering operation as brushless motor that is driven according to the steering operation of the steering member 67, a transmitting device 64 for transmitting rotation of the motor 52 to steering mechanisms 63,63 through a reduction gear mechanism 68 and a drive control unit 51 for driving and controlling the motor 52. The steering member 67 is connected to an input shaft 66.

The transmitting device 64 includes an output shaft 69 connected to the input shaft 66 through a torsion bar (not shown), a connecting shaft 70 coupled to the output shaft 69 through a universal joint, a pinion shaft 61 coupled to the connecting shaft 70 through another universal joint and a rack shaft 62 which has rack teeth meshed with a pinion of the pinion shaft 61 and that is connected to control wheels 71, 71 through the steering mechanisms 63,63. The input shaft 66 and the transmitting device 64 form a steering shaft 65.

Surrounding the input shaft 66, a torque sensor 53 is disposed so as to detect a steering torque value, based on a torsion caused in the torsion bar, which is applied to the input shaft 66 when the steering member 67 is operated. The drive control unit 51 is configured to drive and control the motor 52 based on the steering torque value detected by the torque sensor 53.

The reduction gear mechanism 68 includes a worm gear connected to the output shaft of the motor 52 and a worm wheel fitted at the middle of the output shaft 69, such that rotation of the motor 52 is transmitted to the output shaft 69 through the worm gear and the worm wheel.

In the electric power steering system as described above, a steering effort by the steering operation of the steering member 67 is transmitted to the rack shaft 62 through the input shaft 66, the torsion bar (not shown), the output shaft 69, the connecting shaft 70 and the pinion shaft 61, so that the rack shaft 62 is moved along its longitudinal direction to actuate the steering mechanisms 63,63. Meanwhile, based on the steering torque value detected by the torque sensor 53, the drive control unit 51 drives and controls the motor 52 so that the driving force of the motor 52 is transmitted to the output shaft 69. Thus, the system assists the steering effort of the driver to reduce working load.

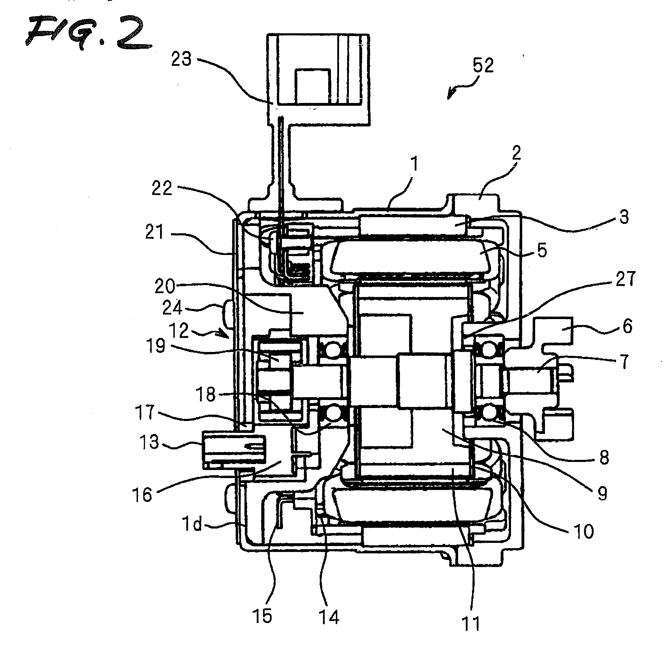

Fig. 2 is a longitudinal sectional view along a plane passing a rotation shaft of the motor 52 as an embodiment of a motor according to the invention.

The motor 52 is configured so that a cylindrical motor case 1 having a bottom supports an outer circumferential surface of a stator core 3 on its inner circumferential surface and a through hole is formed at the center of the bottom on one side of the motor case 1. A stator coil 5 is wound on the stator core 3 to form a stator.

A bracket 2 made of aluminum closes an opening formed on the other side (second side) of the motor case 1. The bracket 2 supports an output shaft side bearing 8 located on the other side (second side) of a rotation shaft 7 on an inner circumferential surface of a through hole formed at the center of the bracket 2.

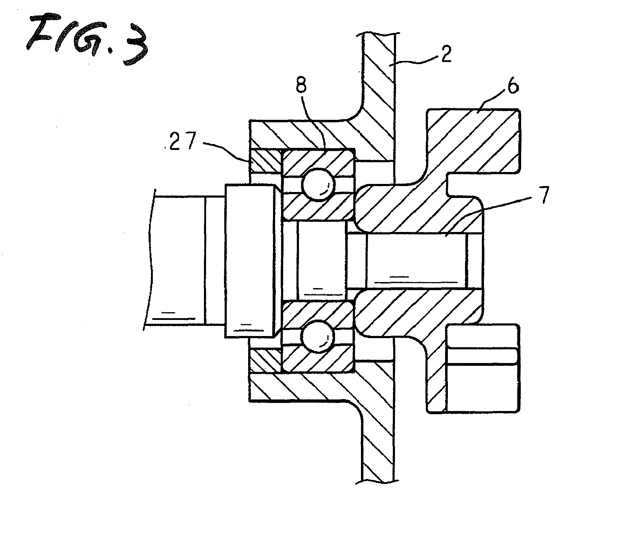

As shown in Fig. 3 as enlarged view, the through hole on the bracket 2 is formed into a length sufficiently more than a width of the output shaft side bearing 8 to be press-fitted, so that a space is defined after fitting the output shaft side bearing 8. A ring member 27 made of aluminum having a rectangular cross-section is press-fitted into the defined space such that the ring member 27 is brought into abutment with the output shaft side bearing 8.

An opposite side bearing 18 located on one side (first side) of the rotation shaft 7 is supported on an inner circumferential surface of a through hole formed at the center of a bottom of a cylindrical end housing 20 with bottom. On one side end of the end housing 20, a flange portion is formed on outer periphery of the end housing 20. The end housing 20 is inserted or press-fitted to the motor case 1 from its opening, such that the flange portion is brought into contact with the bottom of the motor case 1.

A bus-bar housing 14 is formed on the outer circumferential surface of the cylindrical portion of the end housing 20. A resolver rotor 19 of a resolver (rotation angle sensor) 12 that detects a rotational position of the motor rotor and a resolver stator 16 provided around the outer circumference of the resolver rotor 19 are housed within the cylindrical portion of the end housing 20.

Power supply lines and signal lines of the resolver 12 are connected to the drive control unit 51 through a connector 13. The connector 13 is fitted into a grommet 17 attached to a hole formed on an end cover 21.

A rotor yoke 9 is disposed so as to circumferentially face the stator coil 5 of the rotation shaft 7. Magnets 11 are adhered on the outer circumferential surface of the rotor yoke 9 to form a ring shape. The rotor yoke 9 and the magnets 11 are entirely housed in a protection tube 10 to form the motor rotor.

The bus bars 15 in the bus bar housing 14 have partial ring shapes with several different diameters and associated terminals are provided at predetermined positions in accordance with the necessity. Further, in accordance with the necessity, the bus bars 15 are individually connected to the stator coil 5.

Motor side terminals of a connector 23 pass through a hole formed on the outer circumferential surface of the motor case 1 so as to protrude into the motor case 1. The motor side terminals protruding into the motor case 1 are individually screwed with the associated terminals of the bus bars 15 through screws 22.

The end cover 21, which has a shape substantially overlapping with the bottom 1d of the motor case 1, covers the end housing 20 and the resolver 12 so as to prevent the infiltration of contaminations. The end cover 21 is screwed by screws 24 fixed in three screw holes formed on the end housing 20, penetrating through three through holes formed on a peripheral portion of the end cover 21 as well as three through holes formed on the bottom of the motor case 1.

The embodiments described above are to be regard as illustrative rather
than restrictive. Variations and changes may be made by others, and equivalents
employed, without departing from spirit of the present invention. Accordingly,
it is intended that all variation, changes and equivalents which fall within
the spirit and scope of the present invention as defined in the claims be embraced thereby.

This application is based on and claims a priority from a Japanese Patent Application No. 2006-148976 filed on May 29, 2006, the entire content of which are incorporated by reference.

To provide a motor in which a rattle is hardly caused even if a bearing and a shaft are made of different materials, a motor includes a cylindrical motor case having a bottom, in a bracket which supports a press-fitted output shaft side bearing and closes an opening of the motor case. The motor further includes a ring member that is press-fitted to the bracket and is brought into abutment with the output shaft side bearing. The bracket and the ring member are made of the same material.

## Claims

1. A motor comprising:
a cylindrical motor case having a bottom; and
a bracket which supports a press-fitted output shaft side bearing and closes an opening of the motor case;
wherein the motor further includes a ring member that is press-fitted to the bracket and is brought into abutment with the output shaft side bearing.

2. A motor according to claim 1, wherein a material of the ring member is the same as that of the bracket.

3. An electric power steering system comprising:
a torque sensor that detects a steering torque applied by a steering member of a vehicle; and
a motor according to claim 1,
wherein the motor is driven based on the steering torque that is detected by the torque sensor so as to assist a steering operation.
